# EUROPÄISCHE PATENTSCHRIFT

(11) **EP 0 835 776 B1**
(45) Veröffentlichungstag und Bekanntmachung des Hinweises auf die Patenterteilung: **07.11.2001**
(21) Anmeldenummer: 97114536.2
(22) Anmeldetag: 22.08.1997
(51) Int. Cl.: B60J 7/00

(54) **Vorrichtung zum Öffnen und Schliessen einer Öffnung in einem Fahrzeugdach**
Opening and closing device for vehicle open roof
Dispositif pour l'ouverture et la fermeture d'un ouvrant d'un toit de véhicule

(30) Priorität: 27.09.1996 DE 19639867
(43) Veröffentlichungstag der Anmeldung: 15.04.1998
(73) Patentinhaber: Bayerische Motoren Werke Aktiengesellschaft, 80788 München (DE)
(72) Erfinder: Schuster, Gerd, Dr., 85764 Oberschleissheim (DE); Illmann, Holger, 82178 Puchheim (DE); Clausen-Schaumann, Andreas, 82347 Bernried (DE)

(56) Entgegenhaltungen:
- EP-A- 0 150 470
- EP-A- 0 368 404
- DE-A- 3 722 293

## Beschreibung

Die Erfindung betrifft eine Vorrichtung zum Öffnen und Schließen einer Öffnung in einem Fahrzeugdach, mit den im Oberbegriff des Patentanspruches 1 angegebenen Merkmalen.

Eine derartige Vorrichtung ist in der EP-A-0 368 404 an einem Schiebehebedach eines Kraftfahrzeugs zur Steuerung der Bewegungen des Deckels und eines darunter angeordneten Schwebehimmels vorgesehen und weist ein flexibles Umsteuerungselement beispielsweise aus Plastik bzw. Nylon auf, das beim Ausstellen des Deckels gleichzeitig den darunter befindlichen Schwebehimmel in eine Offenlage nach hinten verstellt. Der Schwebehimmel dürfte wesentlich weniger steif als der Deckel ausgebildet sein und insbesondere am Anfang der gekoppelten Öffnungsbewegungen durch den Fahrtwind und/oder einen Luftstrom durch die Dachöffnung angeregt vertikale Schwingungen ausführen, die störende Geräusche verursachen können. Insbesondere anfangs beim Öffnen der Dachöffnung engen der Deckel und der Schwebehimmel die Dachöffnung derart ein, dass lediglich ein kleiner Luftspalt für einen Luftstrom verbleibt, der störende Pfeifgeräusche verursachen kann.

Der Erfindung liegt die Aufgabe zugrunde, eine Vorrichtung mit den Merkmalen im Oberbegriff des Patentanspruches 1 anzugeben, die beim Öffnen der Öffnung im Fahrzeugdach keine oder weniger Luftgeräusche verursacht.

Diese Aufgabe ist durch die im Patentanspruch 1 angegebenen Merkmale gelöst. Vorteilhafte Ausgestaltungen der Erfindung sind den Unteransprüchen entnehmbar.

Nachdem beim Öffnen der Öffnung im Fahrzeugdach der Deckel und der Schwebehimmel über einen elektromotorischen Antrieb derart unabhängig voneinander verstellt werden, dass der Schwebehimmel immer eine dem Deckel vorauseilende Öffnungsbewegung ausführt, ist die teilweise geöffnete Dachöffnung lediglich von dem steifen Deckel eingeengt, wodurch ein durch die Öffnung im Fahrzeugdach strömender Luftstrom bzw. ein an der Dachöffnung vorbeiströmender Luftstrom den Schwebehimmel nicht oder kaum zu Schwingungen anregt, die störende Luftgeräusche verursachen könnten. Die dem Deckel vorauseilende selbsttätige Öffnungsbewegung des Schwebehimmels kann auf die Verstellbewegung des Deckels derart abgestimmt sein, dass eine Fehlbedienung weitgehend ausgeschlossen ist und Luftgeräusche über einen größeren oder den gesamten Verstellbereich des Deckels und des Schiebehimmels weitgehend oder vollständig vermieden sind. Beispielsweise kann der Schwebehimmel beim Anheben der hinteren Deckelkante aus der Schließstellung des Deckels bereits etwa 100 mm geöffnet sein. Beim Verschieben des geschlossenen Deckels in die Öffnungsrichtung kann der Schwebehimmel bereits mindestens 1/3 des Öffnungsweges, bevorzugt seine geöffnete Endposition erreicht haben. Die Vorrichtung ist bevorzugt zur Anwendung an einem Schiebe-Hebe-Dach eines Fahrzeugs vorgesehen.

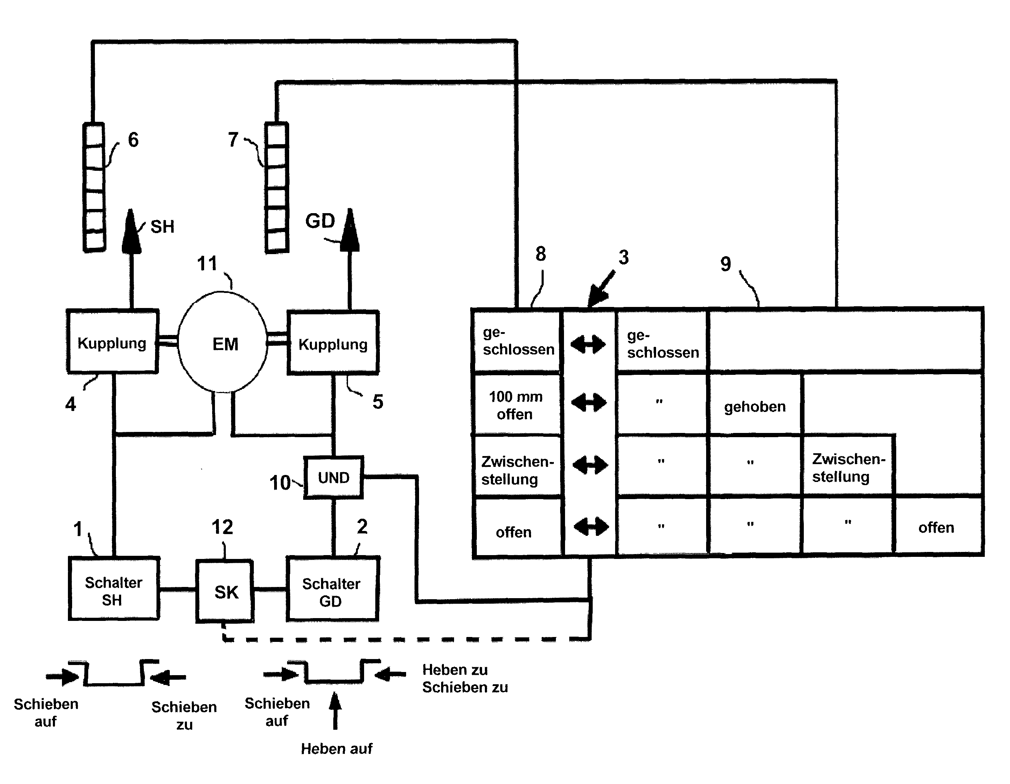

Ein Ausführungsbeispiel wird anhand einer einzigen Figur näher erläutert, die in einem Blockschaltbild die Öffnungsbewegung des Deckels und die vorauseilende Öffnungsbewegung des Schiebehimmels darstellt.

Die in der Figur dargestellte Vorrichtung beinhaltet einen Schalter 1 für die Bewegungen eines nicht näher dargestellten Schwebehimmels (SH) und einen Schalter 2 für die Bewegungen eines nicht näher dargestellten Deckels (GD). Die Schalter können elektronische (Halbleiter) oder elektromechanische (Relais) Schaltermittel aufweisen. Der Deckel ist in bekannter Weise ausgebildet und besteht in bevorzugter Weise aus einem durchsichtigen Material, insbesondere Glas. Durch die jeweilige Deckelstellung, welche durch Schieben des Deckels und/oder Heben und Senken der hinteren Deckelkante einstellbar ist, wird die Luftzufuhr in das Kraftfahrzeuginnere beeinflußt. Durch die jeweiligen Stellungen des Schwebehimmels wird der Grad der Helligkeit, welcher durch den durchsichtigen Deckel bzw. durch die von einem nichtdurchsichtigen Deckel freigegebene Dachöffnung, beeinflußt.

Der Antrieb des Schwebehimmels kann mit Hilfe eines Elektromotors erfolgen, der in herkömmlicher Weise seine Antriebskraft über ein Ritzel auf ein Gewindekabel (nicht näher dargestellt) überträgt. Für den Deckel kann ebenfalls ein Elektromotor vorgesehen sein, der durch ein Ritzel und ein mit dem Deckel verbundenes Gewindekabel das erzeugte Drehmoment auf den Deckel für entsprechende Deckelbewegungen überträgt. Zwei derartige Antriebe sind beispielsweise in der DE 37 06 141 C2 beschrieben. Im Gegensatz zur bekannten Bewegungssteuerung, bei welcher die Bewegungsübertragungselemente völlig unabhängig voneinander verschiebbar sind, erfolgt die Bewegungssteuerung des Deckels bzw. der Steuerung des elektrischen Antriebs für den Dekkel gekoppelt an die vorauseilende Bewegung des Schwebehimmels bzw. seines elektrischen Antriebs.

Beim dargestellten Ausführungsbeispiel sind zwei insbesondere elektromagnetisch betätigbare Kupplungen 4 und 5 vorgesehen, die mit einem Elektromotor 11 an ihren jeweiligen Antriebsseiten verbunden sind. Die Abtriebsseiten sind mit Ritzel für die Bewegungen des Schwebehimmels (SH) und für die Bewegungen des Deckels (GD) verbunden. Die Ritzel stehen in bekannter Weise mit Gewindekabeln, die mit dem Schwebehimmel und dem Deckel verbunden sind, in Antriebsverbindung. Um die jeweiligen Positionen des Schwebehimmels und des Deckels feststellen zu können, sind für den Schwebehimmel ein oder mehrere Zustandsmelder 6 und für die Positionen und Stellungen des Deckels ein oder mehrere Zustandsmelder 7 vorgesehen. Die Zustandsmelder 6 und 7 liefern den jeweiligen Stellungen und Positionen des Schwebehimmels SH und des Deckels GD entsprechende Signale an eine Kopplungseinrichtung 3. Diese elektronisch ausgebildete Kopplungseinrichtung kann beispielsweise mit Registern, die eine Verknüpfung der Betätigung der beiden Schalter 1 und 2 mit den beiden Kupplungen 4 und 5 herstellen, ausgestattet sein. In das eine Register 8, welches die jeweiligen Positionen und Stellungen des Schwebehimmels aufnimmt, sind Registerfächer für die Zustände "geschlossen", "100 mm offen", "Zwischenstellung" und "offen" enthalten. In einem dem Deckel zugeordneten Register 9 sind Fächer für die Positionen und Stellungen "geschlossen", "gehoben", "Zwischenstellung" und "offen" vorhanden. Für die Position "Zwischenstellung" kann eine Registrierung bzw. ein Registerfach entfallen. Zwischen den Schalter 2 für den Start der Deckelbewegung und der dem Deckel zugeordneten Kupplung 5, über welche der elektrische Antrieb auf den Deckel (GD) übertragen wird, ist eine Verknüpfungsschaltung 10, welche in bevorzugter Weise eine UND-Funktion ausübt, geschaltet. Diese Verknüpfungsschaltung 10 leitet den vom Schalter 2 ausgelösten Bewegungsbefehl an die Kupplung 5 zum Einrücken nur dann weiter, wenn eine zulässige Kombination, welche durch die elektronische Kopplungseinrichtung 3 vorgegeben ist, durch die Deckelbewegung erreichbar ist. Eine solche zulässige Kombination ist nur dann gegeben, wenn der Schwebehimmel (SH) eine vorauseilende Position bereits einnimmt bzw. sich auf einer vorauseilenden Position bewegt.

Wenn bei der Betätigung des Schalters 2 ein Zustand vorliegt, bei welchem der Schwebehimmel (SH) sich in keiner voreilenden Position befindet, kann auf mechanischem Wege beispielsweise aufgrund der unterschiedlichen Schalterstellungen über eine Schalterkopplungseinrichtung 12 der Schalter 1 für die Schwebehimmelbewegung betätigt werden, so daß der Schwebehimmel in eine vorauseilende Position gebracht wird. Die Koppelung der beiden Schalter kann auch auf elektrischem, elektronischem oder elektromechanischem Wege erfolgen, und zwar aufgrund eines von der elektronischen Kopplungseinrichtung 3 abgegebenen Zustandssignals, aus welchem sich ergibt, daß aufgrund der in den Registern 8 und 9 gespeicherten Zustände keine Voreilung des Schwebehimmels vorhanden ist.

Im folgenden wird die Arbeitsweise der dargestellten Vorrichtung erläutert.

Wenn der Deckel und der Schwebehimmel sich in geschlossenem Zustand befinden, geben die Zustandsmelder 6 und 7 entsprechende Signale an die zugeordneten Register 8 und 9 ab. Wenn der Deckel geöffnet werden soll, wird in aller Regel der Schalter 2 vorzugsweise manuell betätigt. Da der Schwebehimmel (SH) jedoch noch in seiner geschlossenen Stellung, d.h. in keiner voreilenden Öffnungsposition sich befindet, erfolgt eine Koppelung dieser Schalterbetätigung über die Schalterkopplungseinrichtung 12, so daß der Schalter 1, welcher vorzugsweise verdeckt und als Relais oder dergleichen ausgebildet sein kann, mitbetätigt wird. Diese Kopplung kann mechanisch erfolgen oder durch ein entsprechendes Signal der elektronischen Koppelungseinrichtung 3 elektromechanisch oder elektronisch veranlaßt werden. Bei Betätigung des Schalters 1 wird der Elektromotor 11 eingeschaltet und die Kupplung 4 eingerückt. Hierdurch wird der Schwebehimmel (SH) in eine vorauseilende Öffnungsbewegung gebracht. Sobald der Schwebehimmel die Position "100 mm offen" erreicht hat, wird von der Koppelungseinrichtung 3 ein entsprechendes Signal an die Verknüpfungsschaltung 10 geliefert. Aufgrund deren UND-Funktion wird der vom Schalter 2 kommende Befehl weitergegeben und die Kupplung 5 eingerückt, so daß der Deckel (GD) bis in den Zustand "gehoben" bewegt wird. Dabei wird die hintere Deckelkante angehoben. Die Hubbewegung erfolgt solange wie der Schalter 2 betätigt wird. Sobald der Schwebehimmel die Position "100 mm offen" erreicht hat, kann in Abhängigkeit von der Zeit, mit welcher der Schalter 2 betätigt wird, die hintere Deckelkante in beliebige Zwischenstellungen und bis in ihre Endstellung angehoben werden.

Bei weiterer Schalterbetätigung wird der Schwebehimmel in seine Position "Zwischenstellung" bewegt bzw. verschoben. Diese vorauseilende Position des Schwebehimmels läßt eine Bewegung des Deckels bis in seine Zwischenposition zu. Die Abfrage der Zwischenposition kann auch entfallen und der Schwebehimmel vorauseilend bis in seine geöffnete Endposition bei andauernder Schalterbetätigung gebracht werden. Wenn der Schwebehimmel in seine geöffnete Endstellung "offen" bewegt ist, wird auch der Deckel bis in seine geöffnete Endstellung "offen" bewegt bzw. verschoben.

In bevorzugter Weise ist der Schalter 2 manuell betätigbar. Zwischen den beiden Schaltern ist die Schalterkoppelungseinrichtung 12, welche elektromechanisch, mechanisch oder elektronisch arbeiten kann, vorgesehen. Diese wird in Abhängigkeit von dem durch die Positionsmelder 6 und 7 gewonnenen und in der Kuppelungseinrichtung 3 gespeicherten Abfrageergebnis angesteuert. Wenn der Schwebehimmel SH keine vorauseilende Position einnimmt, wird der Schalter 1 durch die Wirkung der Schalterkoppelungseinrichtung 12 ebenfalls betätigt, so daß der Elektromotor 11 eingeschaltet und die Kupplung 4 für die Schwebehimmelverschiebung eingerückt wird. Der Schwebehimmel wird dann in die voreilende Position gebracht.

Wie in der Figur schematisch für den Schalter 2 dargestellt ist, kann ein manuell bewegbares Schalterbetätigungselement vorgesehen sein, welches für die verschiedenen Bewegungen, die der Deckel ausführen soll, in verschiedenen Richtungen betätigbar ist. Beispielsweise zum Anheben der Deckelhinterkante in die Lüfterstellung kann das Schalterbetätigungselement in Richtung des mit "Heben auf" gekennzeichneten Pfeiles betätigt werden. Zum Verschieben des Deckels in Richtung seiner geöffneten hinteren Endposition kann das Schalterbetätigungselement in Richtung des mit "Schieben auf" gekennzeichneten Pfeiles betätigt werden. Für die Schließbewegungen des Deckels aus angehobener bzw. nach hinten verschobener Öffnungsposition kann das Schalterbetätigungselement in Richtung des mit "Heben zu" und "Schieben zu" betätigt werden.

In Abhängigkeit von der Dauer des Schließbefehls, der über den Schalter 2 gegeben wird, kann nach vollständigem Schließen des Deckels nacheilend auch der Schwebehimmel in Richtung zu seiner Schließposition bewegt werden. Es ist daher nicht unbedingt erforderlich, daß auch der Schalter 1 ein manuell separat bedienbarer Schalter ist. Der Schalter 1 kann dann unsichtbar vorgesehen sein.

Es ist jedoch auch möglich, eine separate manuelle Betätigung des Schalters 1 vorzusehen, so daß der Schwebehimmel separat in eine gewünschte Position gebracht werden kann und auf diese Weise die durch den Deckel kommende Helligkeit reguliert werden kann. Auf ein zugeordnetes Schalterbetätigungsmittel werden dann manuell die Schalterbefehle "Schieben auf" für ein Öffnen und "Schieben zu" für ein Schließen des Schwebehimmels in den elektromotorischen Schwebehimmelantrieb, bestehend aus dem Elektromotor 11 und der zugeordneten Kupplung 4, eingegeben.

Das Schließen des Deckels und des Schwebehimmels kann auf herkömmliche Weise geschehen, wobei der Schwebehimmel in seiner offenen Position bleiben kann bis der Deckel vollständig geschlossen ist. Zum Schließen der Dachöffnung wird dabei zuerst der Antrieb (Kupplung 5 in Verbindung mit dem Elektromotor 11) für den Deckel GD angesteuert, so daß der Deckel in seine geschlossene Endstellung bewegt wird. Anschließend wird der Antrieb (Kupplung 4 in Verbindung mit dem Elektromotor 11) angesteuert, um den Schwebehimmel in seine Schließposition zu bringen.

## Patentansprüche

1. Vorrichtung zum Öffnen und Schließen einer Öffnung in einem Fahrzeugdach mit einem Deckel (GD) und einem Schwebehimmel (SH), welche mittels eines elektromotorischen Antriebes (11) bewegt werden, und einer Koppeleinrichtung (3), welche in Abhängigkeit einer Schalterbetätigung (1, 2) und den Stellungen des Deckels (GD) und des Schwebehimmels (SH) den Deckel (GD) und den Schwebehimmel (SH) verstellt,
**dadurch gekennzeichnet, dass** die Koppeleinrichtung (3) die Deckel- und Schwebehimmelbewegungen derart verknüpft, dass bei einer Schalterbetätigung (1, 2) für die Deckelöffnung eine Öffnungsbewegung des Deckels (GD) nur dann stattfindet, wenn der Schwebehimmel (SH) in Öffnungsrichtung eine gegenüber dem Deckel (GD) voreilende Position eingenommen hat oder zuvor der Schwebehimmel (SH) eine voreilende Bewegung ausführt.

2. Vorrichtung nach Anspruch 1, **dadurch gekennzeichnet, daß** zum Heben der hinteren Deckelkante in Richtung Lüfterstellung des Deckels ein Antrieb für den Schwebehimmel (SH) in der Weise angesteuert ist, daß der Schwebehimmel (SH) voreilend in eine bestimmte teilweise (insbesondere 100 mm) geöffnete Stellung bewegt ist.

3. Vorrichtung nach Anspruch 1 oder 2, **dadurch gekennzeichnet, daß** zum Verschieben des Deckels (GD) in Öffnungsrichtung ein Antrieb für den Schwebehimmel (SH) in der Weise angesteuert ist, daß der Schwebehimmel (SH) voreilend mindestens zur Hälfte, insbesondere ganz geöffnet ist.

4. Vorrichtung nach einem der Ansprüche 1 bis 3, **dadurch gekennzeichnet, daß** ein Antrieb für den Start der Verschiebebewegung des Deckels (GD) (Öffnungsrichtung) dann angesteuert ist, wenn der Schwebehimmel (SH) vollständig offen ist.

5. Vorrichtung nach einem der Ansprüche 1 bis 4, **dadurch gekennzeichnet, daß** ein Schalter (2) manuell betätigbar ist und ein weiterer Schalter (1) zum Start des Elektroantriebs (4, 11) für die voreilende Schwebehimmelpositionierung in Abhängigkeit von den abgefragten Positionen des Deckels (GD) und Schwebehimmels (SH) betätigbar ist.

6. Vorrichtung nach Anspruch 5, **dadurch gekennzeichnet, daß** zwischen den beiden Schaltern (1) und (2) ein in Abhängigkeit vom Abfrageergebnis betätigbare Schalterkopplungseinrichtung (12) vorgesehen ist.

7. Vorrichtung nach Anspruch 5 oder 6, **dadurch gekennzeichnet, daß** der zweite Schalter (1) für eine separate Schwebehimmelbewegung manuell betätigbar ist.

8. Vorrichtung nach einem der Ansprüche 1 bis 7, **dadurch gekennzeichnet, daß** zum Schließen der Dachöffnung zuerst der Antrieb (5, 11) für den Deckel (DG) zum Bewegen des Deckels in seine geschlossene Endstellung und dann der Antrieb (4, 11) für die Schließbewegung des Schwebehimmels (SH) ansteuerbar sind.

## Claims

1. A device for opening and closing an opening in a vehicle roof with a sunroof (GD) and a floating roof liner (SH), which are moved by an electric motor drive (11), and a coupling device (3), which depending on the operation of switches (1, 2) and the position of the sunroof (GD) and the floating roof liner (SH) resets the sunroof (GD) and the floating roof liner (SH),
**characterised in that** the coupling device (3) couples the movements of the sunroof and the floating roof liner such that when a switch (1, 2) is operated for the opening of the sunroof an opening movement of the sunroof (GD) only occurs if the floating roof liner (SH) has assumed a leading position as opposed to that of the sunroof (GD) in the opening direction or the floating roof liner (SH) has previously carried out a leading movement.

2. A device according to Claim 1, **characterised in that** for lifting the rear edge of the sunroof in the direction of the ventilation setting of the sunroof a drive for the floating roof liner (SH) is actuated in such a manner that the floating roof liner (SH) is moved leading to a predetermined partly (especially 100 mm) opened position.

3. A device according to Claim 1 or Claim 2, **characterised in that** for sliding the sunroof (GD) in the opening direction a drive for the floating roof liner (SH) is actuated in such a manner that the floating roof liner (SH) is opened leading at least to a half, especially completely.

4. A device according to one of the Claims 1 to 3, **characterised in that** a drive for the start of the sliding movement of the sunroof (GD) (opening direction) is then controlled on when the floating roof liner (SH) is completely open.

5. A device according to one of the Claims 1 to 4, **characterised in that** a switch (2) can be manually operated and a further switch (1) can be operated to start the electric drive (4, 11) for the leading positioning of the floating roof liner depending on the interrogated positions of the sunroof (GD) and the floating roof liner (SH).

6. A device according to Claims 5, **characterised in that** between the two switches (1) and (2) a switch coupling device (12) is provided, which can operate in dependence on the results of the interrogation.

7. A device according to Claim 5 or Claim 6, **characterised in that** the second switch (1) can be operated manually for a separate movement of the floating roof liner.

8. A device according to one of the Claims 1 to 7, **characterised in that** for closing the roof opening, first the drive (5,11) for the sunroof (DG) can be switched on to move the sunroof into its final closed position and then the drive (4,11) for the closing movement of the floating roof liner (SH).

## Revendications

1. Dispositif pour ouvrir et fermer un ouvrant de toit de véhicule, comprenant un couvercle (GD) et un ciel de toit suspendu (SH) qui peuvent être déplacés par un entraînement (11) électromotorisé, ainsi qu'un dispositif de couplage (3) qui, en fonction de l'actionnement des contacteurs (1, 2) et des positions du couvercle (GD) et du ciel de toit (SH) déplace le couvercle (GD) et le ciel de toit (SH),
**caractérisé en ce que**
le dispositif de couplage (3) connecte les mouvements du couvercle et du ciel de toit de manière que l'actionnement d'un contacteur (1, 2) pour ouvrir le couvercle (GD) provoque le déplacement d'ouverture de celui-ci seulement si le ciel de toit (SH) a pris, en direction d'ouverture, une position en avance sur celle du couvercle (GD) ou si le ciel de toit (SH) exécute d'abord un déplacement l'amenant en avance.

2. Dispositif selon la revendication 1,
**caractérisé en ce que**
pour lever le bord arrière du couvercle en direction de la position d'aération du couvercle, un entraînement du ciel de toit (SH) est commandé de manière que le ciel de toit (SH) est amené en avance dans une position définie d'ouverture partielle (environ 100 mm).

3. Dispositif selon la revendication 1 ou 2,
**caractérisé en ce que**
pour faire coulisser le couvercle (GD) dans le sens de fermeture, un entraînement du ciel de toit (SH) est commandé de manière que le ciel de toit (SH) est préalablement ouvert au moins à moitié, en particulier entièrement.

4. Dispositif selon l'une quelconque des revendications 1 à 3,
**caractérisé en ce que**
pour démarrer le coulissement du couvercle (GD) (sens d'ouverture), un entraînement est commandé quand le ciel de toit (SH) est totalement ouvert.

5. Dispositif selon l'une quelconque des revendications 1 à 4,
**caractérisé en ce qu'**
un contacteur (2) peut être actionné manuellement, et un autre contacteur (1) peut être actionné pour faire démarrer l'entraînement électrique (4, 11) assurant le positionnement en avance du ciel de toit, en fonction des positions du couvercle (GD) et du ciel de toit (SH) obtenues par interrogation.

6. Dispositif selon la revendication 5,
**caractérisé en ce qu'**
il est prévu entre les deux contacteurs (1) et (2) un dispositif de couplage des contacteurs (12) actionnable en fonction du résultat de l'interrogation.

7. Dispositif selon la revendication 5 ou 6,
**caractérisé en ce que**
le deuxième contacteur (1) peut être actionné manuellement pour déplacer séparément le ciel de toit.

8. Dispositif selon l'une des revendications 1 à 7,
**caractérisé en ce que**
pour fermer l'ouverture du toit, on peut commander d'abord l'entraînement (5, 11) du couvercle (DG) de manière à amener celui-ci à sa position finale de fermeture, puis l'entraînement (4, 11) assurant le mouvement de fermeture du ciel de toit (SH).
